# EUROPEAN PATENT APPLICATION

(11) **EP 4 129 751 A1**
(43) Date of publication of application: **08.02.2023**
(21) Application number: 21800197.2
(22) Date of filing: 23.04.2021
(51) Int. Cl.: B60L 58/27, B60L 58/34, H01M 10/615, H01M 10/625

(54) **CHARGING AND HEAT PRESERVATION METHOD AND SYSTEM FOR VEHICLE BATTERY**

(30) Priority: 07.05.2020 CN 202010378902
(71) Applicant: Great Wall Motor Company Limited, Hebei 071000 (CN)
(72) Inventor: WU, Maiqing, Baoding, Hebei 071000 (CN); LI, Lei, Baoding, Hebei 071000 (CN); LIU, Zhiwei, Baoding, Hebei 071000 (CN); SONG, Dandan, Baoding, Hebei 071000 (CN); SONG, Haijun, Baoding, Hebei 071000 (CN); DU, Leiming, Baoding, Hebei 071000 (CN)
(74) Representative: dompatent von Kreisler Selting Werner - Partnerschaft von Patent- und Rechtsanwälten mbB
(86) International application number: PCT/CN2021/089422
(87) International publication number: WO 2021/223605

(57) **Abstract**

A method for heat preservation of a battery of a vehicle by feeding electric power is provided. This method includes: determining an expected vehicle usage time after charging of the battery of the vehicle has been completed and an expected activation time of a function of heating by feeding electric power for heating the battery; and controlling, when the expected activation time is reached, the vehicle to activate the function of heating by feeding electric power according to a current temperature of the battery and the expected vehicle usage time in order that the current temperature of the battery reaches a safety temperature upper threshold to complete heat preservation for the battery. Where the safety temperature upper threshold is configured as a maximum temperature value for maintaining a normal performance of the battery. A heat preservation system for the battery of the vehicle by feeding electric power is further provided. According to the method in the present disclosure, an influence of low temperature on the battery will be avoided, and a waste of electric energy caused due to continuous heating of the battery may be avoided.

## Description

### CROSS-REFERENCE TO RELATED APPLICATIONS

The present disclosure claims priority to Chinese patent application No. 202010378902.4 filed on May 7, 2020 and entitled "method and system for heat preservation of vehicle battery by feeding electric power", the entire contents of which are incorporated herein by reference.

### TECHNICAL FIELD

The present disclosure relates to the technical field of vehicle battery, and more particularly to a method for heat preservation of vehicle battery by feeding electric power, and a system for heat preservation of vehicle battery by feeding electric power.

### DESCRIPTION OF RELATED ART

A fuel-cell vehicle is configured with a power battery and a fuel cell, the power battery and the fuel cell are used for outputting power to a power system of the fuel-cell vehicle. Output powers of the power battery and the fuel cell are decreased with the reduction of temperatures of the power battery and the fuel cell, a slow and tardy dynamic response of the vehicle is further caused, and a user experience on the vehicle is affected accordingly.

Currently, aiming at the power battery and the fuel cell which are low in temperatures during their respective charging processes, the temperatures of the power battery and the fuel cell may be increased through continuous heating. However, this continuous heating manner causes a waste of electric energy, and thereby increasing the user's cost on electric energy consumption.

### SUMMARY

In view of this, one objective of the present disclosure is to propose a method and a system for heat preservation of a battery of a vehicle by feeding electric power, so that an influence of low temperature on the battery of the vehicle can be avoided, and a waste of electric energy caused due to continuous heating of the battery can be further avoided.

In order to achieve this objective, a technical solution of the present disclosure is implemented in the following manner:
a method for heat preservation of a battery of a vehicle by feeding electric power, the method for heat preservation of the battery of the vehicle by feeding electric power includes: determining an expected vehicle usage time after charging of the battery of the vehicle has been completed and an expected activation time of a function of heating by feeding electric power for heating the battery, where the expected activation time is prior to the expected vehicle usage time; and controlling, when the expected activation time is reached, the vehicle to activate the function of heating by feeding electric power to heat the battery according to a current temperature of the battery and the expected vehicle usage time in order that the current temperature of the battery reaches a safety temperature upper threshold, or stopping heating the battery when the expected vehicle usage time is reached. Where the safety temperature upper threshold is configured as a maximum temperature value at which a normal performance of the battery is maintained.

In one preferable embodiment, said controlling the vehicle to activate the function of heating by feeding electric power according to the current temperature of the battery and the expected vehicle usage time includes: detecting whether the current temperature of the battery is below a safety temperature lower threshold; and controlling the vehicle to activate the function of heating by feeding electric power to heat the battery when a detection result indicates that the current temperature of the battery is below the safety temperature lower threshold, and stopping the heating of the battery when the current temperature of the battery reaches the safety temperature upper threshold or the expected vehicle usage time is reached. Wherein the safety temperature lower threshold is configured as a minimum temperature value at which the normal performance of the battery is maintained, and the safety temperature lower threshold corresponds to the safety temperature upper threshold.

In one preferable embodiment, said controlling the vehicle to activate the function of heating by feeding electric power to heat the battery includes: controlling the vehicle to get electric energy from a power grid to heat the battery in response to an activation of the function of heating by feeding electric power.

In one preferable embodiment, said controlling the vehicle to activate the function of heating by feeding electric power according to the current temperature of the battery and the expected vehicle usage time includes: controlling the vehicle to enter a sleep mode when one of following conditions is met. Where the sleep mode is configured to enable electric equipment of the vehicle to be in a power-down sleep state, the conditions includes: the detection result indicates that the current temperature of the battery is equal to or higher than the safety temperature lower threshold; when the current temperature of the battery has reached the safety temperature upper threshold by heating and the expected vehicle usage time is not reached; and waking the vehicle that enters the sleep mode from the sleep mode when the expected vehicle usage time is reached.

In one preferable embodiment, after said controlling the vehicle to enter the sleep mode, the heat preservation method for the battery of the vehicle by feeding electric power further includes: continuing to detect whether the current temperature of the battery is below the safety temperature lower threshold when a preset continuous detection time is reached. Where the continuous detection time is set to be between the expected activation time and the expected vehicle usage time; and controlling the vehicle to activate the function of heating by feeding electric power, if a result of continuous detection indicates that the current temperature of the battery is below the safety temperature lower threshold.

In one preferable embodiment, the battery includes a fuel cell and a power battery, the heat preservation method for the battery of the vehicle by feeding electric power further includes: obtaining a positive detection result when a current temperature of one of the fuel cell and the power battery is below the battery temperature lower threshold, or obtaining a negative detection result when the current temperature of one of the fuel cell and the power battery is higher than the battery temperature lower threshold.

In one preferable embodiment, said determining the expected vehicle usage time and the expected activation time of the function of heating by feeding electric power for heating the battery after the charging operation for the battery of the vehicle has been completed includes: determining the expected vehicle usage time corresponding to a current vehicle usage condition according to a historical vehicle usage data of a user; where the historical vehicle usage data includes a corresponding relationship between a vehicle usage condition and a historical vehicle usage time, and the vehicle usage condition includes at least one from a group consisting of driving behavior data, driving demand data, vehicle usage area data, and vehicle usage environment data; and determining the expected activation time of the function of heating by feeding electric power according to a current ambient temperature and the expected vehicle usage time.

Compared with the prior art, the method for charging-based heat preservation of the battery of the vehicle described in the present disclosure has the following benefits: the expected vehicle usage time after charging of the battery of the vehicle is completed and the expected activation time of the function of heating by feeding electric power are determined, and the vehicle is controlled to activate the function of heating by feeding electric power according to the current temperature of the battery and the expected vehicle usage time when the expected activation time of the function of heating by feeding electric power is reached. Thus, the time for heating the battery of the vehicle is limited by the expected vehicle usage time, the time for heating the battery of the vehicle is reduced and is associated with the expected activation time of the function of heating by feeding electric power, a waste of energy consumption caused due to continuous activating of the function of heating by feeding electric power is avoided, a vehicle driving performance of the vehicle under the low temperature environment are not significantly reduced. Thus, the driving performance is improved.

Another objective of the present disclosure is to provide a charging-based heat preservation system for a battery of a vehicle to avoid the battery from harmless of low temperature and avoid a waste of electric energy caused due to continuous heating of the battery.

In order to achieve this objective, the technical solutions of the present disclosure are implemented in this manner:
the charging-based heat preservation system for the battery of the vehicle includes: a time acquisition unit configured to obtain an expected vehicle usage time after charging of the battery of the vehicle has been completed and a corresponding expected activation time of a function of heating during charging for heating the battery from a cloud data platform, where the expected activation time is prior to the expected vehicle usage time; and a vehicle control unit configured to control the vehicle to activate the function of heating during charging according to a current temperature of the battery and the expected vehicle usage time in order that the current temperature of the battery reaches a safety temperature upper threshold, or when the expected vehicle usage time is reached, when the expected activation time is reached; where the safety temperature upper threshold is configured as a maximum temperature value at which a normal performance of the battery is maintained.

Preferably, the vehicle control unit includes: a detection module configured to detect whether the current temperature of the battery is below a safety temperature lower threshold; a hybrid control module configured to send a charging-and-heating request after receiving a heating flag bit instruction from the cloud data platform; a heating management module configured to control the vehicle to activate the function of heating during charging to heat the battery when a detection result indicates that the current temperature of the battery is below the safety temperature lower threshold, and to stop heating the battery when the current temperature of the battery reaches the safety temperature upper threshold or when the expected vehicle usage time is reached; where the safety temperature lower threshold is configured as a minimum temperature value at which the normal performance of the battery is maintained, and the safety temperature lower threshold corresponds to the safety temperature upper threshold.

Preferably, the heating management module is configured to control the vehicle to activate the function of heating during charging to heat the battery includes: the heating management module is configured to control the vehicle to get electric energy from a power grid to heat the battery in response to an activation of the function of heating during charging.

Preferably, the heating management module further includes: a sleep control sub-module configured to control the vehicle to enter a sleep mode when one of following conditions is met, where the sleep mode is configured to enable electric equipment of the vehicle to be in a power-down sleep state, the conditions includes: the detection result indicates that the current temperature of the battery is equal to or higher than the safety temperature lower threshold; when the current temperature of the battery has reached the safety temperature upper threshold by heating and the expected vehicle usage time is not reached; and an awakening module configured to control the vehicle to be awakened from the sleep mode when the expected vehicle usage time is reached, aiming at the vehicle in the sleep mode.

Preferably, the charging-based heat preservation system for the battery of the vehicle further includes: a continuous detection module configured to continue to detect whether the current temperature of the battery is below the safety temperature lower threshold when a preset continuous detection time is reached, where the continuous detection time is configured to be between the expected activation time and the expected vehicle usage time; and the heating management module is further configured to control the vehicle to activate the function of heating during charging, if a result of continuous detection indicates that the current temperature of the battery is below the safety temperature lower threshold.

Preferably, the battery includes a fuel cell and a power battery.
Preferably, the time acquisition unit includes: an expected vehicle usage time determination module configured to determine the expected vehicle usage time corresponding to a current vehicle usage condition according to a historical vehicle usage data of a user, where the historical vehicle usage data includes a corresponding relationship between a vehicle usage condition and a historical vehicle usage time, and the vehicle usage condition comprises at least one of driving behavior data, driving demand data, vehicle usage area data, and vehicle usage environment data; and an expected activation time determination module configured to determine the expected activation time of the function of heating during charging according to a current ambient temperature and the expected vehicle usage time.

Furthermore, a computer device is further provided, thecomputer device includes:
a memory, wherein the memory stores a computer readable code; and
one or a plurality of processors, when the computer readable code is executed by the one or plurality of processors, the computer device is configured to perform the aforesaid method for heat preservation of the battery of the vehicle by feeding electric power.

Furthermore, a computer program is further provided, the computer program includes a computer readable code, that, when executed by the computer device, causes the computer device to perform the aforesaid method for heat preservation method of the battery of the vehicle during charging.

Furthermore, a non-transitory computer readable storage medium is further provided, the non-transitory computer readable storage medium stores a computer program instruction that causes the computer device to perform the aforesaid method for heat preservation of the battery of the vehicle by feeding electric power.

The computer readable storage medium and the method for heat preservation of the battery of the vehicle by feeding electric power have the same advantages over the prior art. Thus, the advantages of the computer readable storage medium over the prior art are not repeatedly described here.

Other features and advantages of the present disclosure will be described in detail with reference to the subsequent detailed description of embodiments.

### BRIEF DESCRIPTION OF THE DRAWINGS

The accompanying figures that constitute a part of the present disclosure are used to provide further interpretation of the present disclosure, the schematic implementations and the explanations of the schematic implementations are intended to explain the present disclosure but not constitute as inappropriate limitation to the present disclosure. In the figures:
FIG. 1 illustrates a schematic flowchart of a heat preservation method for a battery of a vehicle by feeding electric power according to one embodiment of the present disclosure;
FIG. 2 illustrates a schematic flowchart of a method for determining an expected vehicle usage time and an expected activation time of a function of heating by feeding electric power according to one embodiment of the present disclosure;
FIG. 3 illustrates a schematic diagram of controlling the vehicle to activate the function of heating by feeding electric power according to one embodiment of the present disclosure;
FIG. 4 illustrates one schematic diagram of the heat preservation method for the battery of the vehicle by feeding electric power according to one embodiment of the present disclosure;
FIG. 5 illustrates another schematic diagram of the heat preservation method for the battery of the vehicle by feeding electric power according to one embodiment of the present disclosure;
FIG. 6 illustrates yet another schematic diagram of the heat preservation method for the battery of the vehicle by feeding electric power according to one embodiment of the present disclosure;; and
FIG. 7 illustrates yet another schematic diagram of the heat preservation method for the battery of the vehicle by feeding electric power according to one embodiment of the present disclosure;
FIG. 8 illustrates a modular block diagram of a charging-based heat preservation system for the battery of the vehicle according to one embodiment of the present disclosure;
FIG. 9 illustrates a schematic structural diagram of a computer device according to one embodiment of the present disclosure;

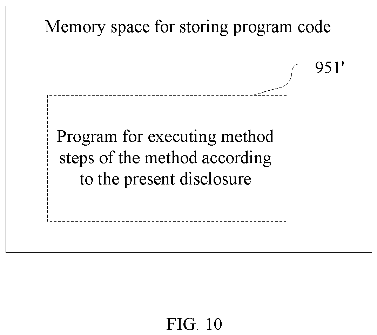

FIG. 10 illustrates a schematic bock diagram of a memory for storing program codes of the method of the present invention according to one embodiment of the present disclosure.

### Reference numerals are listed below:

81-time acquisition unit; 811-expected vehicle usage time determination module;
812-expected activation time determination module; 82-vehicle control unit
821-determination module 822-hybrid control module;
823-heat management module

### DETAILED DESCRIPTION OF EMBODIMENTS

It should be noted that, in the case of no conflict, the embodiments of the present disclosure and the features in the embodiments may be combined with each other.

The following embodiments of the present disclosure will be described in detail for a fuel-cell vehicle, where the fuel cell vehicle includes a power battery and a fuel cell, the power battery will be described in detail below. In addition, for the convenience of description, the power battery is referred to as a battery hereinafter.

A power output of a battery of a vehicle is relevant with a temperature of the battery, the relevance between the power output of the battery and the temperature of the battery is shown in table 1 below. When the temperature of the fuel cell is identical to the ambient temperature, the lower the ambient temperature, the more serious the power limit of the fuel cell and the slower the increase rate of the power. When the temperature of the battery is below a lower safety temperature threshold, it indicates that the battery cannot normally output power to the power system.

| Range of ambient temperature | Power limit | Increase rate of power |
|---|---|---|
| ≥60°C | ≤120kW | 45kW/s |
| 20∼60°C | ≤60kW | 35kW/s |
| 5∼20°C | ≤40kW | 20kW/s |
| ≤5°C | - | - |

When the vehicle is started, if the temperature of the battery is too low, the battery needs to be heated, so that a time for starting the vehicle is lengthened, and a waste of electric energy is caused. If the battery is started frequently in a low-temperature environment, a service life of the battery is shortened. In order to solve the problems mentioned above, the present disclosure is particularly described with reference to the plurality of drawings below.

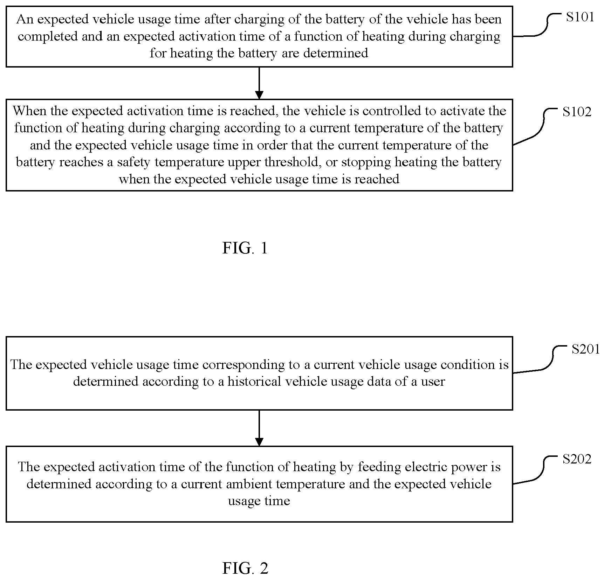

FIG. 1 illustrates a flowchart of a method for heat preservation of a battery of a vehicle by feeding electric power, as shown in FIG. 1, this method for heat preservation of the battery of the vehicle by feeding electric power includes:

At step S101, an expected vehicle usage time after charging of the battery of the vehicle has been completed and an expected activation time of a function of heating by feeding electric power for heating the battery are determined, where the expected activation time is prior to the expected vehicle usage time; and

At step S102, when the expected activation time is reached, the vehicle is controlled to activate the function of heating by feeding electric power according to the current temperature of the battery and the expected vehicle usage time, so that the current temperature of the battery reaches a safety temperature upper threshold or when the expected vehicle usage time is reached.

The expected vehicle usage time is the time when the vehicle is expected to be used after charging of the vehicle is completed. For example, the expected vehicle usage time is expected to be 9:00 o' clock, the function of heating by feeding electric power is mainly used for heating the battery, and the expected activation time may be a first hour ahead of the expected vehicle usage time. In this embodiment, the expected activation time may be set by the user himself/herself according to the user's requirement. In order to make the expected vehicle usage time and the expected activation time to be better matched with the actual situation in the present disclosure, the expected vehicle usage time and the expected activation time will be determined according to the method described below.

FIG. 2 illustrates a flowchart of a method for determining the expected vehicle usage time after charging of the battery has been completed and the expected activation time of a function of heating by feeding electric power, as shown in FIG. 2, the expected vehicle usage time after charging of the battery has been completed and the expected activation time of the function of heating by feeding electric power for heating the battery are determined includes:

at step S201, the expected vehicle usage time corresponding to the current vehicle usage condition is determined according to historical vehicle usage data of the user, where the historical vehicle usage data includes a corresponding relationship between vehicle usage conditions and a historical vehicle usage time, the vehicle usage conditions includes one or more of driving behavior data, driving demand data, vehicle usage area data, and vehicle usage environment data.

The historical vehicle usage data refers to the user's driving habits actually, during driving process of the vehicle, the user's driving habits are collected through a cloud big data platform. For example, when the vehicle is stopped at a point A by a user A, the ambient temperature is 10° C, a driving demand is working, a parking time is 18:00 o' clock, the vehicle usage time is 9 points after the vehicle is fully charged, the whole process of usage of the vehicle is recorded as historical vehicle usage data. After a plurality of historical vehicle usage data is stored, the expected vehicle usage time corresponding to the current vehicle usage condition may be determined according to the cloud big data platform.

At step S202, the expected activation time of the function of heating by feeding electric power is determined according to the current ambient temperature and the expected vehicle usage time.

The current ambient temperature is the ambient temperature (e.g., 5° C) when the battery is charged, the expected vehicle usage time is the time determined by performing the step S201, and the expected activation time of the function of heating by feeding electric power is configured to be associated with a time duration for heating the battery from the current ambient temperature to a safety temperature upper threshold. For example, the battery is heated from -5 ° C to 20° C for 2 hours. When the expected activation time of the function of heating by feeding electric power is 7:00 o' clock, and the expected vehicle usage time is 9:00 o' clock, the expected activation time of the function of heating by feeding electric power is 7:00 o' clock, so that the battery temperature of the vehicle can reaches 20° C when the user uses the vehicle at 9:00 o' clock. If the user uses the vehicle at the expected vehicle usage time, after the vehicle is started, the battery may reach a high efficiency state without the need of continuing to heat the battery.

The function of heating by feeding electric power is mainly used to heat the battery, wherein the heating activation time and duration are determined according to the actual situation of the vehicle, and the heating manner of the specific function of heating by feeding electric power is as follows.

In one preferable embodiment, in the step S102, the vehicle is controlled to activate the function of heating by feeding electric power according to the current temperature of the battery and the expected vehicle usage time includes: whether the current temperature of the battery is below the safety temperature lower threshold is detected; and the vehicle is controlled to activate the function of heating by feeding electric power according to a detected result and the expected vehicle usage time.

The safety temperature lower threshold may be 5° C, and the vehicle-mounted battery temperature sensor may be used to detect the current temperature of the battery. When the detection result indicates that the current temperature of the battery is below 5° C, and the expected vehicle usage time is not reached, the function of heating by feeding electric power of the vehicle is controlled to be continuously activated. Once the expected vehicle usage time is reached, heating operation performed on the battery is stopped even though the temperature of the battery does not reach 5° C, so that an automatic heating of the battery of the vehicle is avoided when the vehicle is used by the user. In this condition, it only needs to set the heating according to the actual requirement of the user.

The vehicle is controlled to activate the function of heating by feeding electric power according to the detected result and the expected vehicle usage time includes: the vehicle is controlled to activate the function of heating by feeding electric power to heat the battery when the detection result indicates that the current temperature of the battery is below the safety temperature lower threshold, heating of the battery is stopped when the current temperature of the battery reaches the safety temperature upper threshold, or when the expected vehicle usage time is reached. The safety temperature lower threshold is configured as a minimum temperature value that can enable the battery to maintain a normal performance, and the safety temperature lower threshold corresponds to the safety temperature upper threshold.

In one preferable embodiment, the vehicle is controlled to activate the function of heating by feeding electric power to heat the battery includes: the vehicle is controlled to obtain power supply from the power grid and heat the battery in response to the activation of the function of heating by feeding electric power.

After the vehicle is charged, the electric energy may be obtained from the power grid through a EV charger, this manner of charging may avoid a loss of the vehicle endurance mileage caused by acquiring electric energy from the battery, so that the endurance mileage of the vehicle may be increased. For example, when the current temperature of the battery is -20° C which is below the safety temperature lower threshold, the battery can only be heated up to 0° C when the user uses the vehicle at the expected vehicle usage time of 9:00 o' clock, in this condition, the heating of the battery is stopped even though the current temperature of the battery does not reach 5 ° C, the vehicle is waited to be used and controlled by the user. In addition, if the current temperature of the battery is 0 ° C which is below the safety temperature lower threshold of 5 ° C, the temperature of the battery has reached the safety temperature threshold of 20° C at 8:00 o' clock before the expected vehicle usage time of 9:00 o' clock when the user uses the vehicle, in this condition, the heating may also be stopped at 8:00 o' clock.

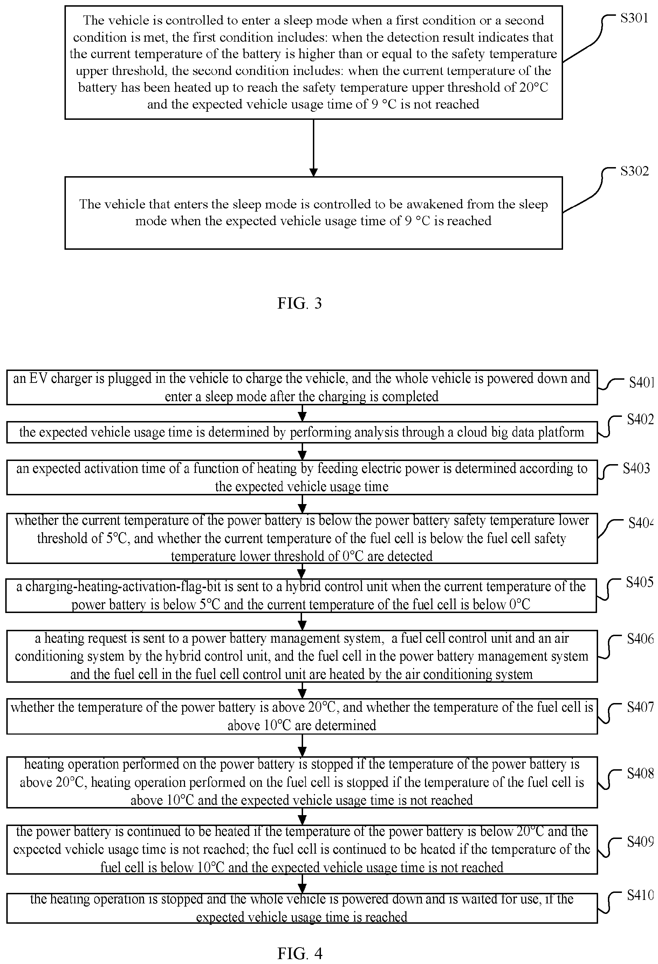

In one preferable embodiment, FIG. 3 is a flowchart of controlling the vehicle to activate the function of heating by feeding electric power. As shown in FIG. 3, the vehicle is controlled to activate the function of heating by feeding electric power according to the current temperature of the battery and the expected vehicle usage time further includes

At step S301, the vehicle is controlled to enter a sleep mode when a first condition or a second condition is met.

The first condition includes: when the detection result indicates that the current temperature of the battery is higher than or equal to the safety temperature upper threshold.

The second condition includes: when the current temperature of the battery has been heated up to reach the safety temperature upper threshold of 20° C and the expected vehicle usage time of 9 ° C is not reached; and
at step S302, the vehicle that enters the sleep mode is controlled to be awakened from the sleep mode when the expected vehicle usage time of 9 ° C is reached.

The sleep mode is configured to enable electric equipment of the vehicle to enter a power-down sleep state, in the sleep mode, an electronic device such as a heater has the lowest power consumption in the sleep mode, in this condition, the battery is not heated, and a special event such as locking the car only needs to be met. The vehicle is controlled to be awakened from the sleep mode to respond to a control operation of the user.

In one preferable embodiment, after the vehicle is controlled to enter the sleep mode, the heat preservation method for the battery of the vehicle by feeding electric power may further include: whether the current temperature of the battery is below the safety temperature lower threshold of 5° C is continued to be detected when a preset continuous detection time is reached, where the continuous detection time is configured to be between the expected activation time and the expected vehicle usage time; and if the continuous detection result indicates that the current temperature of the battery is below the safety temperature lower threshold, the vehicle is controlled to activate the function of heating by feeding electric power.

The continuous detection time may be 30 minutes prior to the expected vehicle usage time, and is set according to actual requirement of the user. If the continuous detection result indicates that the current temperature of the battery is equal to or higher than the safety temperature lower threshold, the power battery does not need to be continuously heated, and the vehicle is waited to be used by the user.

The heat preservation method for the power battery by feeding electric power are described above, a heat preservation method by feeding electric power for the vehicle having the fuel cell and the power battery is described below.

In one preferable embodiment, when any one of the following two conditions is satisfied, a positive detection result is determined, the two conditions include: the current temperature of the fuel cell is below a fuel cell temperature lower threshold of 0° C; the current temperature of the power battery is below a power battery temperature lower threshold of 5° C.

When the following two conditions are satisfied, a negative detection result is determined, the two conditions include: the current temperature of the fuel cell is higher than or equal to the fuel cell temperature lower threshold of 0° C; the current temperature of the power battery is higher than or equal to the power battery temperature lower threshold of 5° C.

FIG. 4 illustrates a flowchart of a heat preservation method for a battery of a vehicle by feeding electric power according to the present disclosure. As shown in FIG. 4, the heat preservation method for the battery of the vehicle by feeding electric power includes:
at step S401, an EV charger is plugged in the vehicle to charge the vehicle, and the whole vehicle is powered down and enter a sleep mode after the charging is completed.

At step S402, the expected vehicle usage time is determined by performing analysis through a cloud big data platform.

At step S403, an expected activation time of a function of heating by feeding electric power is determined according to the expected vehicle usage time.

At step S404, whether the current temperature of the power battery is below the power battery safety temperature lower threshold of 5° C, and whether the current temperature of the fuel cell is below the fuel cell safety temperature lower threshold of 0° C are detected.

At step S405, a flag-bit for activating the function of heating by feeding electric power is sent to a hybrid control unit when the current temperature of the power battery is below 5° C and the current temperature of the fuel cell is below 0° C.

At step S406, a heating request is sent to a power battery management system, a fuel cell control unit and an air conditioning system by the hybrid control unit, and the fuel cell in the power battery management system and the fuel cell in the fuel cell control unit are heated by the air conditioning system;

At step S407, whether the temperature of the power battery is above 20° C, and whether the temperature of the fuel cell is above 10° C are determined.

At step S408, heating operation performed on the power battery is stopped if the temperature of the power battery is above 20° C, heating operation performed on the fuel cell is stopped if the temperature of the fuel cell is above 10° C and the expected vehicle usage time is not reached.

At step S409, the power battery is continued to be heated if the temperature of the power battery is below 20° C and the expected vehicle usage time is not reached; the fuel cell is continued to be heated if the temperature of the fuel cell is below 10° C and the expected vehicle usage time is not reached;

At step S410, the heating operation is stopped and the whole vehicle is powered down and is waited for use, if the expected vehicle usage time is reached.

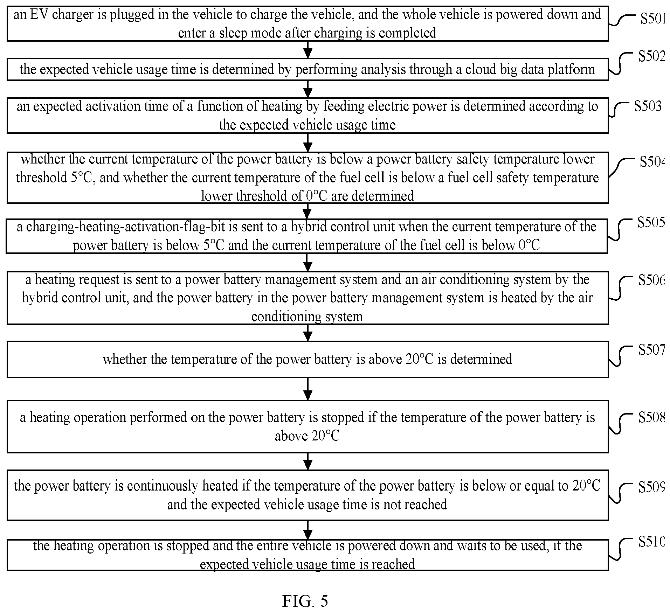

FIG. 5 illustrates a flowchart of a heat preservation method for a battery of a vehicle by feeding electric power according to the present disclosure. As shown in FIG. 5, the heat preservation method includes:

At step S501, an EV charger is plugged in the vehicle to charge the vehicle, and the whole vehicle is powered down and enter a sleep mode after charging is completed.

At step S502, an expected vehicle usage time is determined by analysis through a cloud big data platform.

At step S503, an expected activation time of a function of heating by feeding electric power is determined according to the expected vehicle usage time.

At step S504, whether the current temperature of the power battery is below a power battery safety temperature lower threshold 5° C, and whether the current temperature of the fuel cell is below a fuel cell safety temperature lower threshold of 0° C are determined.

At step S505, a flag-bit for activating the function of heating by feeding electric power is sent to a hybrid control unit when the current temperature of the power battery is below 5° C and the current temperature of the fuel cell is higher than or equal to 0° C;

At step S506, a heating request is sent to a power battery management system and an air conditioning system by the hybrid control unit, and the power battery in the power battery management system is heated by the air conditioning system;

At step S507, whether the temperature of the power battery is above 20° C is determined.

At step S508, a heating operation performed on the power battery is stopped if the temperature of the power battery is above 20° C.

At step S509, the power battery is continuously heated if the temperature of the power battery is below or equal to 20° C and the expected vehicle usage time is not reached.

At step S510, the heating operation is stopped and the entire vehicle is powered down and waits to be used, if the expected vehicle usage time is reached.

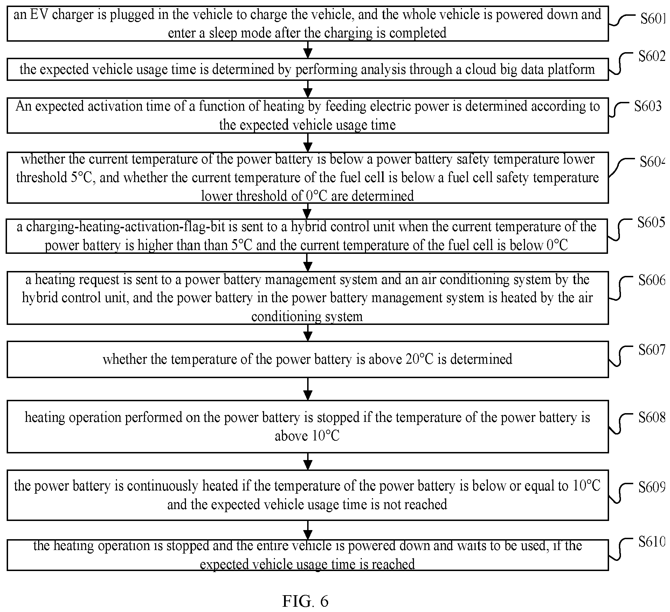

FIG. 6 illustrates a flowchart of a heat preservation method for a battery of a vehicle by feeding electric power according to the present disclosure. As shown in FIG. 6, the heat preservation method includes:
At step S601, an EV charger is plugged in the vehicle to charge the vehicle, and the whole vehicle is powered down and enter a sleep mode after charging is completed.
At step S602, an expected vehicle usage time is determined by analysis through a cloud big data platform.
At step S603, an expected activation time of a function of heating by feeding electric power is determined according to the expected vehicle usage time.
At step S604, whether the current temperature of the power battery is below a power battery safety temperature lower threshold 5° C, and whether the current temperature of the fuel cell is below a fuel cell safety temperature lower threshold of 0° C are determined.
At step S605, a flag-bit for activating the function of heating by feeding electric power is sent to a hybrid control unit when the current temperature of the power battery is higher than than 5° C and the current temperature of the fuel cell is below 0° C;
At step S606, a heating request is sent to a power battery management system and an air conditioning system by the hybrid control unit, and the power battery in the power battery management system is heated by the air conditioning system;
At step S607, whether the temperature of the power battery is above 20° C is determined.
At step S608, heating operation performed on the power battery is stopped if the temperature of the power battery is above 10° C.
At step S609, the power battery is continuously heated if the temperature of the power battery is below or equal to 10° C and the expected vehicle usage time is not reached.
At step S610, the heating operation is stopped and the entire vehicle is powered down and waits to be used, if the expected vehicle usage time is reached.

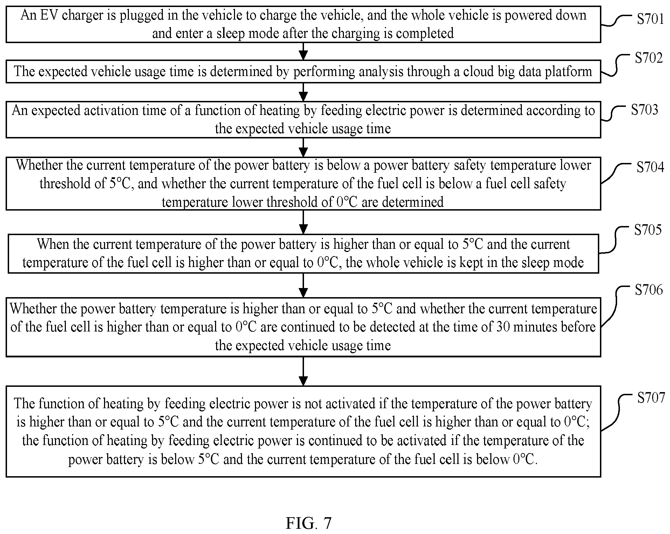

FIG. 7 illustrates a flowchart of a heat preservation method for a battery of a vehicle by feeding electric power according to the present disclosure. As shown in FIG. 7, the heat preservation method for the battery of the vehicle by feeding electric power includes:
At step S701, an EV charger is plugged in the vehicle to charge the vehicle, and the whole vehicle is powered down and enter a sleep mode after charging of the vehicle is completed.
At step S702, the expected vehicle usage time is determined by analysis through the cloud big data platform.
At step S703, an expected activation time of the function of heating by feeding electric power is determined according to the expected vehicle usage time.
At step S704, whether the current temperature of the power battery is below a power battery safety temperature lower threshold of 5° C, and whether the current temperature of the fuel cell is below a fuel cell safety temperature lower threshold of 0° C are determined;
At step S705, when the current temperature of the power battery is higher than or equal to 5° C and the current temperature of the fuel cell is higher than or equal to 0° C, the whole vehicle is kept in the sleep mode.
At step S706, whether the power battery temperature is higher than or equal to 5° C and whether the current temperature of the fuel cell is higher than or equal to 0° C are continued to be detected at the time of 30 minutes before the expected vehicle usage time;
At step S707, the function of heating by feeding electric power is not activated if the temperature of the power battery is higher than or equal to 5° C and the current temperature of the fuel cell is higher than or equal to 0° C; the function of heating by feeding electric power is continued to be activated if the temperature of the power battery is below 5° C and the current temperature of the fuel cell is below 0° C.

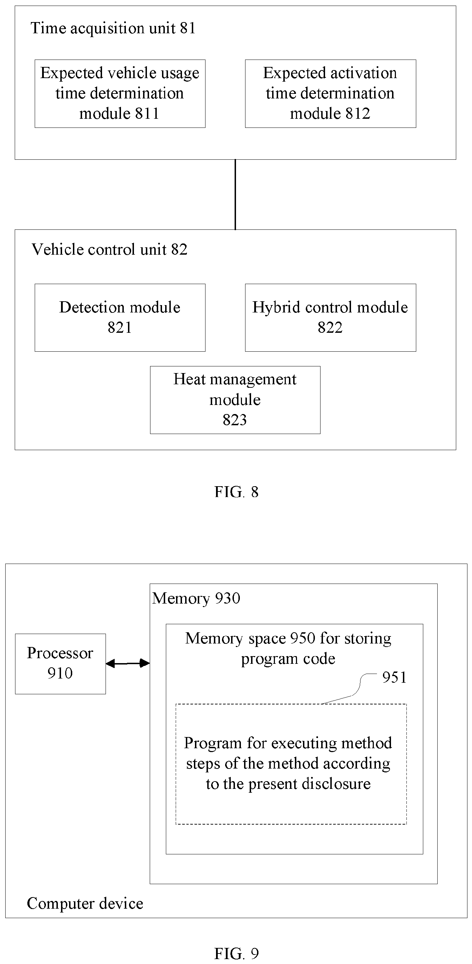

FIG. 8 illustrates a block diagram of a charging-based heat preservation system for a battery of a vehicle according to the present disclosure. As shown in FIG. 8, the charging and heat preservation system of the vehicle battery includes: a time acquisition unit 81 configured to obtain an expected vehicle usage time after charging of the battery of the vehicle has been completed and a corresponding expected activation time of a function of heating during charging for heating the battery from a cloud data platform, where the expected activation time is prior to the expected vehicle usage time; and a vehicle control unit 82 configured to control the vehicle to activate the function of heating during charging to heat the vehicle according to a current temperature of the battery and the expected vehicle usage time, in order that the current temperature of the battery reaches a safety temperature upper threshold, or when the expected vehicle usage time is reached, when the expected activation time is reached. Where the safety temperature upper threshold is configured as a maximum temperature value at which a normal performance of the battery is maintained.

Preferably, the vehicle control unit 82 includes: a detection module configured to detect whether the current temperature of the battery is below a safety temperature lower threshold; a hybrid control module 822 configured to send a charging-and-heating request after receiving a heating flag bit instruction from the cloud data platform; a heating management module 823 configured to control the vehicle to activate the function of heating during charging to heat the battery when a detection result indicates that the current temperature of the battery is below the safety temperature lower threshold, and stop heating the battery when the current temperature of the battery reaches the safety temperature upper threshold or when the expected vehicle usage time is reached. Where the safety temperature lower threshold is configured as a minimum temperature value that enables the battery to maintain the normal performance of the battery, and the safety temperature lower threshold corresponds to the safety temperature upper threshold.

Preferably, the heating management module 823 is configured to control the vehicle to get electric energy from a power grid to heat the battery in response to an activation of the function of heating during charging.

Preferably, the heating management module 823 further includes: a sleep control sub-module (not shown in the figures) configured to control the vehicle to enter a sleep mode when one of following conditions is met, where the sleep mode is configured to enable electric equipment of the vehicle to be in a power-down sleep state, the conditions include: the detection result indicates that the current temperature of the battery is equal to or higher than the safety temperature lower threshold; when the current temperature of the battery has reached the safety temperature upper threshold by heating and the expected vehicle usage time is not reached; and an awakening module (not shown in the figures) configured to control the vehicle to be awakened from the sleep mode when the expected vehicle usage time is reached, aiming at the vehicle in the sleep mode.

Preferably, the charging-based heat preservation system for the battery of the vehicle further includes: a continuous detection module 831 configured to continue to detect whether the current temperature of the battery is below the safety temperature lower threshold when a preset continuous detection time is reached, where the continuous detection time is configured to be between the expected activation time and the expected vehicle usage time; and the heating management module 823 is further configured to control the vehicle to activate the function of heating during charging, if a continuous detection result indicates that the current temperature of the battery is below the safety temperature lower threshold.

Preferably, the battery includes a fuel cell and a power battery.

Preferably, the time acquisition unit includes: an expected vehicle usage time determination module 811 configured to determine the expected vehicle usage time corresponding to a current vehicle usage condition according to a historical vehicle usage data of a user, where the historical vehicle usage data includes a corresponding relationship between a vehicle usage condition and a historical vehicle usage time, and the vehicle usage condition includes at least one of driving behavior data, driving demand data, vehicle usage area data, and vehicle usage environment data; and an expected activation time determination module 812 configured to determine the expected activation time of the function of heating during charging according to a current ambient temperature and the expected vehicle usage time.

The heat preservation method for the battery of the vehicle during charging and the heat preservation system for the battery of the vehicle during charging have the same advantages over the prior art, so that the advantages of the heat preservation system for the battery of the vehicle during charging are not repeatedly described herein.

A computer device is provided in one embodiment of the present disclosure, the computing and processing device includes:
a memory that stores a computer readable code; and
one or a plurality of processors; when the computer readable code is executed by the one or plurality of processors, the computer device is configured to perform the method for charging-based heat preservation of the battery of the vehicle.

A non-transitory computer readable storage medium is provided in one embodiment of the present disclosure, this computer readable storage medium stores a computer program code that, when executed by the computer device, causes the computer device to perform the method for heat preservation of the battery of the vehicle by feeding electric power.

A processor is provided in one embodiment of the present disclosure, the processor is configured to execute a program, when the program is executed by the processor, the aforesaid method for heat preservation of the battery of the vehicle by feeding electric power is performed.

A computer program product is further provided in the present disclosure, the computer program product includes a computer readable program code, that, when executed by the computer device, causes the computer device to perform the aforesaid method for heat preservation of the battery of the vehicle during charging.

FIG. 9 illustrates a schematic structural diagram of the computer device according to one embodiment of the present disclosure. The computer device generally includes a processor 910 and a computer program product or computer-readable medium in the form of memory 930. The memory 930 may be an electronic memory such as a flash memory, an EEPROM (Electrically Erasable Programmable Read-Only Memory), an EPROM(Erasable Programmable Read-Only Memory), a hard disk, or a ROM (Read-Only Memory). The memory 930 has a storage space 950 for executing a program code 951 of the method steps in the heat preservation method for the battery of the vehicle by feeding electric power described above. For example, the storage space 950 for the program code may include various program codes 951 for implementing the various steps in the heat preservation method for the battery of the vehicle by feeding electric power, respectively. These program codes may be read out from one or more computer program products or be written into the one or more computer program products. These computer program products include a program code carrier such as a hard disk, a CD (Compact Disc), a memory card, or a floppy disk. This computer program product is generally a portable or fixed storage unit as shown in FIG. 9. The storage unit may have a storage segment, or a storage space arranged in a manner similar to that of the memory 930 in the computer device of FIG. 9. The program code may be compressed, for example, the program code may be compressed in an appropriate form. Generally, the storage unit includes a computer-readable code 951' (i.e., a code that can be read by a processor such as the processor 910), that, when executed by the computer device, causes the computer device to perform the various steps in the heat preservation method for the battery of the vehicle by feeding electric power as described above.

Those skilled in the art should understand that the embodiments of the present application may be provided as a method, a system or a computer program product. Therefore, the present application may be in the form of an entirely hardware embodiment, an entirely software embodiment, or an embodiment of the combination of software and hardware. Moreover, the present application may also be in the form of a computer program product implemented on one or more computer-readable storage mediums (which include but are not limited to a magnetic disk memory, a CD-ROM, an optical memory, etc.) containing computer-readable program code.

The present disclosure is described with reference to flowcharts and/or block diagrams of the method, the device (system), and the computer program product according to embodiments of the present disclosure. It should be understood that each process in the flowchart and/or each block in the block diagram, and the combinations of processes in the flowchart and/or blocks in the block diagram may be implemented by computer program instructions. These computer program instructions may be provided to a processor of a general purpose computer, a special purpose computer, an embedded processor, or other programmable data processing device to produce a machine, such that the instruction executed by the processor of the computer or other programmable data processing device generates the device for implementing the functions specified in one or more processes in the flowchart and/or specified in one or more blocks in the block diagram.

These computer program instructions may also be stored in a computer-readable memory capable of guiding the computer or other programmable data processing device to be operated in a particular manner, such that the instructions stored in the computer-readable memory produce a manufacture material including an instruction device that implements the functions specified in one or more processes of the flowchart and/or specified in one or more blocks in the block diagram.

These computer program instructions may also be loaded into the computer or other programmable data processing device, such that a series of operational steps are performed on the computer or the programmable data processing device to produce a computer-implemented process, and the instruction executed on the computer or the programmable data processing device provides steps for implementing the functions specified in one or more processes of the flowchart and/or specified in one or more blocks of the block diagram.

In a typical configuration of a computer device, the computer device includes one or more processors (central processing units), an input/output interface, a network interface, and an internal memory.

The memory may include a volatile memory, a RAM (Random Access Memory and/or a non-volatile memory in a computer-readable medium, which may be such as a ROM (Read Only Memory) or a flash RAM. This memory is an example of the computer-readable medium.

The computer-readable medium includes a non-volatile medium and a volatile medium, a removable medium and a non-removable medium, information may be stored through any method or technology. The information may be computer-readable instruction, data structure, program modules, or other data. Examples of storage medium of a computer include but are not limited to PRAM (Phase Change Random Access Memory), SRAM (Static Random Access Memory), DRAM (Dynamic Random Access Memory), other types of RAM (Random Access Memory), ROM (Read Only Memory), EEPROM (Electrically Erasable Programmable Read Only Memory), flash memory or other memory, CD-ROM (Compact Disk Read Only Memory), DVD (Digital Versatile Disc), or other optical storage medium, magnetic cassettes, magnetic tape magnetic disk storage or other magnetic storage devices, or any other non-transmission medium, the storage medium may be used to store information that can be accessed by the computing device. According to the definitions in the present disclosure, the computer-readable medium does not include a transitory computer readable media such as a modulated data signal and a modulated carrier wave.

Furthermore, terms such as "comprising", "including" or any other variation are intended to cover a non-exclusive inclusion, so that a process, a method, goods, or a device which includes a series of elements not only include the elements, but also include other elements that are not expressly listed, or include the elements inherent to such process, method, goods, or device. In the condition of no further limitations, an element which is defined by a sentence "includes one..." does not exclude a presence of additional identical elements in the process, the method, the goods, and the device which include the elements.

The aforesaid embodiments are only preferable embodiments of the present disclosure, and should not be regarded as limitations to the present disclosure. All modifications, equivalent replacements, and improvements, which are made within the spirit and the principle of the present disclosure, should all be included in the protection scope of the present disclosure.

## Claims

1. A method for heat preservation of a battery of a vehicle by feeding electric power, implemented by a computer device, comprising:
determining an expected vehicle usage time after charging of the battery of the vehicle has been completed and an expected activation time of a function of heating by feeding electric power for heating the battery, wherein the expected activation time is prior to the expected vehicle usage time; and
controlling, when the expected activation time is reached, the vehicle to activate the function of heating by feeding electric power to heat the battery according to a current temperature of the battery and the expected vehicle usage time in order that the current temperature of the battery reaches a safety temperature upper threshold, or stopping heating the battery when the expected vehicle usage time is reached;
wherein the safety temperature upper threshold is configured as a maximum temperature value at which a normal performance of the battery is maintained.

2. The method according to claim 1, wherein said controlling the vehicle to activate the function of heating by feeding electric power according to the current temperature of the battery and the expected vehicle usage time comprises:
detecting whether the current temperature of the battery is below a safety temperature lower threshold; and
controlling the vehicle to activate the function of heating by feeding electric power to heat the battery when a detection result indicates that the current temperature of the battery is below the safety temperature lower threshold, and stopping the heating of the battery when the current temperature of the battery reaches the safety temperature upper threshold or the expected vehicle usage time is reached;
wherein the safety temperature lower threshold is configured as a minimum temperature value at which the normal performance of the battery is maintained, and the safety temperature lower threshold corresponds to the safety temperature upper threshold.

3. The method according to claim 2, wherein said controlling the vehicle to activate the function of heating by feeding electric power to heat the battery comprises:
controlling the vehicle to get electric energy from a power grid to heat the battery in response to an activation of the function of heating by feeding electric power.

4. The method according to claim 2, wherein said controlling the vehicle to activate the function of heating by feeding electric power according to the current temperature of the battery and the expected vehicle usage time comprises:
controlling the vehicle to enter a sleep mode when one of following conditions is met, wherein the conditions comprises: the detection result indicates that the current temperature of the battery is equal to or higher than the safety temperature lower threshold; when the current temperature of the battery has reached the safety temperature upper threshold by heating and the expected vehicle usage time is not reached; wherein the sleep mode is configured to enable electric equipment of the vehicle to be in a power-down sleep state; and
waking the vehicle that enters the sleep mode from the sleep mode when the expected vehicle usage time is reached.

5. The method according to claim 4, wherein after said controlling the vehicle to enter the sleep mode, the method for heat preservation of the battery of the vehicle by feeding electric power further comprises:
continuing to detect whether the current temperature of the battery is below the safety temperature lower threshold when a preset continuous detection time is reached, wherein the continuous detection time is set to be between the expected activation time and the expected vehicle usage time; and
controlling the vehicle to activate the function of heating by feeding electric power, if a continuous detection result indicates that the current temperature of the battery is below the safety temperature lower threshold.

6. The method according to claim 2, wherein the battery comprises a fuel cell and a power battery, and the method for heat preservation of the battery of the vehicle by feeding electric power further comprises: obtaining a positive detection result when a current temperature of one of the fuel cell and the power battery is below the battery temperature lower threshold, or obtaining a negative detection result when the current temperature of one of the fuel cell and the power battery is higher than the battery temperature lower threshold.

7. The method according to claim 1, wherein said obtaining the expected vehicle usage time and the expected activation time of the function of heating by feeding electric power for heating the battery after the charging operation for the battery of the vehicle has been completed comprises:
determining the expected vehicle usage time corresponding to a current vehicle usage condition according to a historical vehicle usage data of a user, wherein the historical vehicle usage data comprises a corresponding relationship between a vehicle usage condition and a historical vehicle usage time, and the vehicle usage condition comprises at least one from a group consisting of driving behavior data, driving demand data, vehicle usage area data, and vehicle usage environment data; and
determining the expected activation time of the function of heating by feeding electric power according to a current ambient temperature and the expected vehicle usage time.

8. A system for heat preservation of vehicle battery by feeding electric power, comprising:
a time acquisition unit configured to obtain an expected vehicle usage time after charging of the battery of the vehicle has been completed and a corresponding expected activation time of a function of heating during charging for heating the battery from a cloud data platform, wherein the expected activation time is prior to the expected vehicle usage time; and
a vehicle control unit configured to control the vehicle to activate the function of heating during charging according to a current temperature of the battery and the expected vehicle usage time in order that the current temperature of the battery reaches a safety temperature upper threshold, or when the expected vehicle usage time is reached, when the expected activation time is reached;
wherein the safety temperature upper threshold is configured as a maximum temperature value at which a normal performance of the battery is maintained.

9. The system for heat preservation of vehicle battery by feeding electric power according to claim 8, wherein the vehicle control unit comprises:
a detection module configured to detect whether the current temperature of the battery is below a safety temperature lower threshold;
a hybrid control module configured to send a charging-and-heating request after receiving a heating flag bit instruction from the cloud data platform;
a heating management module configured to control the vehicle to activate the function of heating during charging to heat the battery when a detection result indicates that the current temperature of the battery is below the safety temperature lower threshold, and to stop heating the battery when the current temperature of the battery reaches the safety temperature upper threshold or the expected vehicle usage time is reached;
wherein the safety temperature lower threshold is configured as a minimum temperature value at which the normal performance of the battery is maintained, and the safety temperature lower threshold corresponds to the safety temperature upper threshold.

10. The system for heat preservation of vehicle battery by feeding electric power according to claim 9, wherein the heating management module is configured to control the vehicle to activate the function of heating during charging to heat the battery comprises:
the heating management module is configured to control the vehicle to get electric energy from a power grid to heat the battery in response to an activation of the function of heating during charging.

11. The system for heat preservation of vehicle battery by feeding electric power according to claim 9, wherein the heating management module further comprises:
a sleep control sub-module configured to control the vehicle to enter a sleep mode when one of following conditions is met, wherein the sleep mode is configured to enable electric equipment of the vehicle to be in a power-down sleep state, the conditions comprises: the detection result indicates that the current temperature of the battery is equal to or higher than the safety temperature lower threshold; when the current temperature of the battery has reached the safety temperature upper threshold by heating and the expected vehicle usage time is not reached; ; and
an awakening module configured to control the vehicle to be awakened from the sleep mode when the expected vehicle usage time is reached, aiming at the vehicle in the sleep mode.

12. The system for heat preservation of vehicle battery by feeding electric power according to claim 11, further comprising:
a continuous detection module configured to continue to detect whether the current temperature of the battery is below the safety temperature lower threshold when a preset continuous detection time is reached, wherein the continuous detection time is configured to be between the expected activation time and the expected vehicle usage time; and
the heating management module is further configured to control the vehicle to activate the function of heating during charging, if a result of continuous detection indicates that the current temperature of the battery is below the safety temperature lower threshold.

13. The system for heat preservation of vehicle battery by feeding electric power according to claim 9, wherein the battery comprises a fuel cell and a power battery.

14. The system for heat preservation of a battery of a vehicle during charging according to claim 8, wherein the time acquisition unit comprises:
an expected vehicle usage time determination module configured to determine the expected vehicle usage time corresponding to a current vehicle usage condition according to a historical vehicle usage data of a user, wherein the historical vehicle usage data comprises a corresponding relationship between a vehicle usage condition and a historical vehicle usage time, and the vehicle usage condition comprises at least one of driving behavior data, driving demand data, vehicle usage area data, and vehicle usage environment data; and
an expected activation time determination module configured to determine the expected activation time of the function of heating during charging according to a current ambient temperature and the expected vehicle usage time.

15. A computing and processing device, comprising:
a memory, wherein the memory stores a computer readable code; and
one or a plurality of processors, when the computer readable code is executed by the one or plurality of processors, the computing and processing device is configured to perform the method according to any one of claims 1-7.

16. A computer program, comprising a computer readable code, that, when executed on a computing and processing device, causes the computing and processing device to perform the method according to any one of claims 1-7.

17. A non-transitory computer readable storage medium, which stores a computer program instruction, wherein the computer program instruction is used to cause a machine to perform the method for heat preservation of the battery of the vehicle during charging according to any one of claims 1-7.
